# EUROPÄISCHE PATENTSCHRIFT

(11) **EP 1 108 964 B1**
(45) Veröffentlichungstag und Bekanntmachung des Hinweises auf die Patenterteilung: **19.05.2004**
(21) Anmeldenummer: 00126558.6
(22) Anmeldetag: 12.12.2000
(51) Int. Cl.: F25B 17/08, F25B 29/00, F24D 11/02

(54) **Adsorptionswärmepumpe mit mehreren Modulen**
Adsorption heat pump with several modules
Pompe à chaleur à adsorption avec plusieurs modules

(30) Priorität: 13.12.1999 AT 208599
(43) Veröffentlichungstag der Anmeldung: 20.06.2001
(73) Patentinhaber: Vaillant GmbH, 42859 Remscheid (DE)
(72) Erfinder: Lang, Rainer, Dr., 51067 Köln (DE)
(74) Vertreter: Hocker, Thomas

(56) Entgegenhaltungen:
- DE-A- 2 659 641
- DE-A- 3 140 003
- DE-A- 19 902 694
- DE-C- 3 145 722
- US-A- 2 438 105
- US-A- 4 548 048
- US-A- 5 729 988

## Beschreibung

Die Erfindung bezieht sich auf eine Adsorptionswärmepumpe gemäß dem Oberbegriff der Ansprüche 1 bis 3. Eine derartige Wärmepumpe ist aus der DE 199 02 694 A1 bekannt.

Sorptionswärmepumpen aller Art können zur Beheizung von Gebäuden sowie zur Bereitung von Warmwasser eingesetzt werden. Sie zeichnen sich durch eine besonders gute Effizienz aus, da sie mit Hilfe eines thermodynamischen Kreisprozesses Umgebungswärme auf ein für Heiz- oder Warmwasserzwecke nutzbares Temperatumiveau bringen. Durch diesen Effekt können mit derartigen Wärmepumpen deutlich höhere primärenergetische Nutzungsgrade erreicht werden, als mit konventioneller Heiztechnik.

Bei bekannten Adsorptionswärmepumpen der eingangs erwähnten Art, z.B. wenn Zeolith als Adsorbens und Wasser als Adsorbat verwendet wird, ist es erforderlich, den Wärmeträger im Wärmeträgerkreislauf W1 beim Verlassen der Wärmezelle auf eine Temperatur zu bringen, die im Bereich von 130 bis 200°C liegt, um eine attraktive Wärmeziffer zu erreichen.

Dabei ergibt sich jedoch der Nachteil, daß die Abgase des Brenners beim Verlassen der Wärmezelle aufgrund der treibenden Temperaturdifferenz eine entsprechend höhere Temperatur haben müssen, typischerweise eine Temperatur von 230 bis 250°C, wobei das Energiepotential der heißen Abgase bei den herkömmlichen Wärmepumpen der eingangs erwähnten Art nicht genützt werden kann und in die Umgebung entlassen wird.

Ziel der Erfindung ist es, diese Nachteile zu vermeiden und eine Adsorptionswärmepumpe vorzuschlagen, die sich durch einen besonders hohen Nutzungsgrad der eingesetzten Primärenergie auszeichnet.

Aus der DE 31 45 722 C1 ist bekannt, dass Abgase des Austreibers einer Absorptionswärmepumpe energetisch genutzt werden können, wobei im vorliegenden Fall der Wasserdampf im Abgas nicht auskondensiert wird, wodurch nur relativ wenig Wärme genutzt wird.

Erfindungsgemäß wird die Aufgabenstellung der Erfindung bei einer Adsorptionswärmepumpe der eingangs erwähnten Art durch die kennzeichnenden Merkmale der Ansprüche 1 bis 3 erreicht. Durch die vorgeschlagenen Maßnahmen ist es auf einfache Weise möglich, die in den Abgasen enthaltene Wärmeenergie in den Kreisprozeß einzubringen und nutzbringend zu verwerten. Dabei wird auch noch die Kondensationswärme des im Abgas vorhandenen Wasserdampfs gewonnen, wodurch sich eine besonders hohe Effizienz der eingesetzten Primärenergie ergibt.

Durch die Merkmale des Anspruches 1 ergibt sich der Vorteil, dass der Wärmeträger im Verbraucherkreislauf nach dem Durchströmen des Verbrauchers, bei dem es sich um einen Wärmetauscher zur Bereitung von Heizwasser für eine Raumheizung oder um einen Brauchwasserbereiter handeln kann, außer aus dem Kondensator-Wärmetauscher und dem Niedertemperatur-Wärmetauscher auch aus dem Abgas-Wärmetauscher, wo es zur Kondensation des im Abgas enthaltenen Wasserdampfs kommt, Wärme aufnehmen kann und wieder zur Versorgung des Verbrauchers bereit ist. Dabei ist auch sichergestellt, daß das Abgas mit nur geringer Temperatur in die Umgebung entweicht.

Durch die Merkmale des Anspruches 2 ist sichergestellt, daß der Wärmeträger durch alle Verdampfer der Module strömt und dort abgekühlt wird, da er Wärme für die Verdampfung des Kältemittels, meist Wasser, bereitstellt. Beim Durchströmen des Verdampfer-Wärmetauschers nimmt der Wärmeträger Umgebungswärme auf und erwärmt sich, wobei der Wärmeträger beim Durchströmen des Abgas-Wärmetauschers weiter erwärmt wird und es zum Auskondensieren des im Abgas enthaltenen Wasserdampfes kommt. Dabei wird der Wärmeträger soweit erwärmt, dass er wieder den Verdampfern zugeleitet werden kann.

Bei einer solchen Betriebsweise ergeben sich insbesondere bei niedrigen Umgebungstemperaturen Vorteile, da durch den Abgas-Wärmetauscher die Verdampfungstemperatur des Adsorbats Wasser in den Verdampfern angehoben wird.

Durch die Merkmale des Anspruches 3 ergibt sich der Vorteil, dass sich einerseits eine Anhebung der Verdampfungstemperatur des Adsorbats ergibt und gleichzeitig auch die Temperatur des dem Verbraucher zugeführten Wärmeträgers erhöht wird.

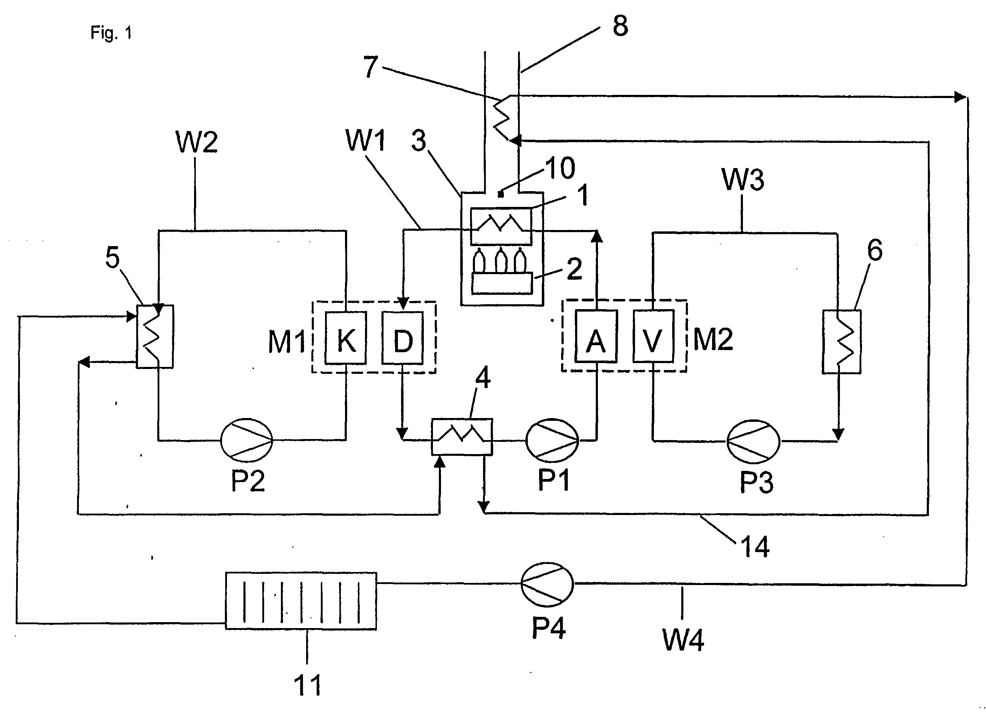

Die Erfindung wird nun anhand der Zeichnungen näher erläutert. Dabei zeigen die Fig. 1 bis 3 schematisch verschiedene Ausführungsformen erfindungsgemäßer Adsorptionswärmepumpen.

Eine erfindungsgemäße Adsorptionswärmepumpe weist vier verschiedene Wärmeträgerkreisläufe W1, W2, W3, W4 auf. Dabei umfaßt der Wärmeträgerkreislauf W1 eine Wärmezelle 3, in der ein Hochtemperatur-Wärmetauscher 1 angeordnet ist, der von einem Brenner 2 beaufschlagt ist. An einen Auslaß 10 der Wärmezelle 3 ist eine Abgasleitung 8 angeschlossen, in der ein Abgas-Wärmetauscher 7 angeordnet ist.

Der Wärmeträgerkreislauf W1 umfaßt weiters eine serielle Schaltung aller Desorber D und aller Adsorber A der beteiligten Module M1 und M2 der Wärmepumpe, sowie eines Niedertemperatur-Wärmetauschers 4 und einer Pumpe P1.

Ein weiterer Wärmeträgerkreislauf W2 umfaßt eine serielle Schaltung eines Kondensator-Wärmetauschers 5 und der Kondensatoren K aller beteiligter Module M1 und M2, sowie einer Pumpe P2.

Ein dritter Wärmeträgerkreislauf W3 umfaßt eine serielle Schaltung der Verdampfer V aller beteiligter Module mit einem Verdampfer-Wärmetauscher 6 sowie einer Pumpe P3.

Ein weiterer Wärmeträgerkreislauf W4 umfaßt eine Pumpe P4 und einen Verbraucher 11, sowie den Kondensator-Wärmetauscher 5 des Wärmeträgerkreislaufes W2, den Niedertemperatur-Wärmetauscher 4 des Wärmeträgerkreislaufes W1 und die Pumpe P4 in serieller Schaltung.

Bei der Ausführungsform nach der Fig. 1 weist der Verbraucher-Wärmeträgerkreislauf W4 außerdem noch den Abgas-Wärmetauscher 7 in serieller Schaltung auf.

Der im Wärmeträgerkreislauf W1 strömende Wärmeträger wird in der Wärmezelle 3, bzw. im Hochtemperatur-Wärmetauscher 1 durch den Brenner 2 erwärmt. Bei Verwendung von Zeolith als Adsorbens und Wasser als Adsorbat muß der Wärmeträger beim Verlassen der Wärmezelle 3 eine Temperatur haben, die mindestens im Bereich von 180 bis 200°C liegt, um attraktive Wärmeziffern zu erreichen. Aufgrund der erforderlichen treibenden Temperaturdifferenz verlassen daher die heißen Brenngase des Brenners 2 die Wärmezelle 3 mit einer Temperatur von 230 bis 250°C. Die heißen Abgase geben ihre Wärmeenergie an den Abgas-Wärmetauscher 7 ab, wobei die heißen Abgase soweit abgekühlt werden, daß es zur Kondensation des in den Abgasen enthaltenen Wasserdampfs kommt. Dadurch wird auch die Kondensationswärme an den Wärmeträger des Wärmeträgerkreislaufs W4 abgegeben.

Der Wärmeträger W4 strömt nach Abgabe der Nutzwärme im Verbraucher 11 in den Kondensator-Wärmetauscher 5 und in den Niedertemperatur-Wärmetauscher 4, wo der Wärmeträger Nutzwärme aus den Wärmeträgerkreisläufen W2 und W1 aufnimmt. Anschließend strömt der Wärmeträger in den Abgas-Wärmetauscher 7, wo er weiter aufgeheizt wird und dadurch die aus der Wärmezelle 3 kommenden Abgase so weit abkühlt, daß es zur Kondensation des enthaltenen Wasserdampfes kommt. Danach strömt der Wärmeträger im Wärmeträgerkreislauf 4 wieder in den Verbraucher 11, um Nutzwärme abzugeben.

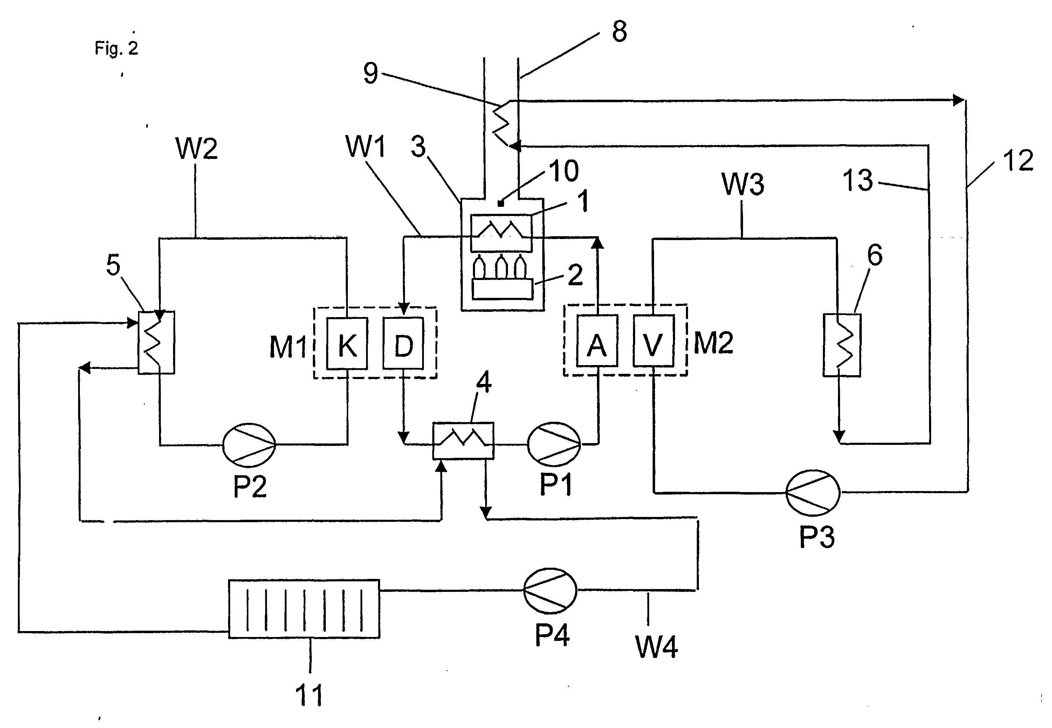

Bei der Ausführungsform nach der Fig. 2 ist ein Abgas-Wärmetauscher 9 nicht in den Wärmeträgerkreislauf W4 integriert, sondern in den Wärmeträgerkreislauf W3 integriert, wobei der Abgas-Wärmetauscher 9 zwischen dem Verdampfer-Wärmetauscher 6 und der Pumpe P3 seriell eingeschaltet ist.

Bei dieser Ausführungsform strömt der Wärmeträger des Verdampferkreislaufes W3 durch alle Verdampfer V der Wärmepumpenmodule M1, M2 und wird dort abgekühlt, da er Wärme für die Verdampfung des Kältemittels Wasser bereitstellt. Danach strömt der Wärmeträger im Wärmeträgerkreislauf W3 in den Verdampfer-Wärmetauscher 6, wo er durch Aufnahme von Umgebungswärme aufgewärmt wird. Weiterhin strömt der Wärmeträger in den Abgas-Wärmetauscher 9, wo er weiter aufgewärmt wird und dadurch die aus der Wärmezelle 3 kommenden Abgase bis zur Kondensation des in den Abgasen enthaltenen Wasserdampfes. Danach strömt der Wärmeträger wieder in die Verdampfer V der Wärmepumpenmodule M1, M2, um die Verdampfungswärme bereitzustellen. Dadurch ist es besonders bei kalten Umgebungstemperaturen einfach möglich, die Verdampfungstemperatur des Adsorbats Wasser in den Verdampfern V anzuheben.

Die Ausführungsform nach der Fig. 3 stellt eine Kombination der beiden zuvor beschriebenen Lösungen dar.

Dabei umfaßt der Wärmeträgerkreislauf W4 wie bei der Ausführungsform nach der Fig. 1 auch den Abgas-Wärmetauscher 7. Gleichzeitig ist ein weiterer Abgas-Wärmetauscher 9 in den Wärmeträgerkreislauf W3 integriert, wie dies bereits bei der Ausführungsform nach der Fig. 2 beschrieben ist.

Bei dieser Ausführungsform strömt im Wärmeträgerkreislauf W4 der Wärmeträger nach der Abgabe der Nutzwärme im Verbraucher 11 in den Kondensator-Wärmetauscher 5 des Wärmeträgerkreislaufes W2 und danach in den Niedertemperatur-Wärmetauscher 4, wo er jeweils Nutzwärme aus den Wärmeträgerkreisläufen W1 und W2 aufnimmt. Danach strömt der Wärmeträger in den Abgas-Wärmetauscher 7, wo er weiter aufgewärmt wird und dadurch die aus der Wärmezelle 3 kommenden Abgase bis zur Kondensation des darin enthaltenen Wasserdampfes abkühlt. Danach strömt der Wärmeträger W4 wieder in den Verbraucher 11, um Nutzwärme abzugeben.

Gleichzeitig strömt der Wärmeträger im Wärmeträgerkreislauf W3 nach dem Durchströmen aller Verdampfer V der Wärmepumpenmodule M1, M2 in den Verdampfer-Wärmetauscher 6, wo er durch Aufnahme von Umgebungeswärme aufgewärmt wird. Anschließend strömt der Wärmeträger in den Abgas-Wärmetauscher 9, wo er weiter aufgewärmt wird und dadurch die aus der Wärmezelle kommenden Abgase weiter abkühlt. Danach strömt der Wärmeträger wieder in die Verdampfer V der Wärmepumpenmodule M1, M2, um die Verdampfungswärme bereitzustellen.

## Patentansprüche

1. Adsorptionswärmepumpe mit mehreren Modulen, wobei außer einem einen Verbraucher (11) und eine Pumpe (P4), sowie mindestens zwei Wärmetauscher (4, 5) aufweisenden Verbraucherkreislauf (W4), insgesamt mindestens drei ebenfalls je eine Pumpe (P1, P2, P3) aufweisende Wärmeträgerkreisläufe (W1, W2, W3) zusammengeschaltet sind, von denen einer (W1) alle Adsorber (A) und Desorber (D) aller Module (M1, M2) seriell mit einem in einer mit einer Abgasleitung (8) versehenen Wärmezelle (3) angeordneten und von einem Brenner (2) beaufschlagbaren Hochtemperatur-Wärmetauscher (1) mit einem Niedertemperatur-Wärmetauscher (4) sowie einer Pumpe (P1) verbindet, **dadurch gekennzeichnet, dass** in der Abgasleitung (8) ein kondensierender Abgas-Wärmetauscher (7, 9) angeordnet ist, und dass der kondensierende Abgas-Wärmetauscher (7) in den Verbraucherkreis (W4) eingeschaltet ist, wobei der Vorlauf des Abgas-Wärmetauschers (7) mit dem Verbraucher (11) verbunden ist, der abströmseitig mit einem Kondensator-Wärmetauscher (5) eines zweiten Wärmeträgerkreislaufes (W2) verbunden ist, der seinerseits mit dem mit einem Rücklauf (14) des Abgas-Wärmetauschers (7) verbundenen Niedertemperatur-Wärmetauscher (4) verbunden ist.

2. Adsorptionswärmepumpe mit mehreren Modulen, wobei außer einem einen Verbraucher (11) und eine Pumpe (P4), sowie mindestens zwei Wärmetauscher (4, 5) aufweisenden Verbraucherkreislauf (W4), insgesamt mindestens drei ebenfalls je eine Pumpe (P1, P2, P3) aufweisende Wärmeträgerkreisläufe (W1, W2, W3) zusammengeschaltet sind, von denen einer (W1) alle Adsorber (A) und Desorber (D) aller Module (M1, M2) seriell mit einem in einer mit einer Abgasleitung (8) versehenen Wärmezelle (3) angeordneten und von einem Brenner (2) beaufschlagbaren Hochtemperatur-Wärmetauscher (1) mit einem Niedertemperatur-Wärmetauscher (4) sowie einer Pumpe (P1) verbindet, **dadurch gekennzeichnet, dass** in der Abgasleitung (8) ein kondensierender Abgas-Wärmetauscher (7, 9) angeordnet ist, und dass der Abgas-Wärmetauscher (9) in einen dritten Wärmeträgerkreislauf (W3) eingeschaltet ist, der alle Verdampfer (V) der adsorbierenden Module (M2) seriell mit einem Verdampfer-Wärmetauscher (6) und einer Pumpe (P3) verbindet, wobei der Vorlauf (12) des Abgas-Wärmetauschers (9) mit den Verdampfern (V) und der Rücklauf (13) mit dem Verdampfer-Wärmetauscher (6) in Verbindung steht.

3. Adsorptionswärmepumpe mit mehreren Modulen, wobei außer einem einen Verbraucher (11) und eine Pumpe (P4), sowie mindestens zwei Wärmetauscher (4, 5) aufweisenden Verbraucherkreislauf (W4), insgesamt mindestens drei ebenfalls je eine Pumpe (P1, P2, P3) aufweisende Wärmeträgerkreisläufe (W1, W2, W3) zusammengeschaltet sind, von denen einer (W1) alle Adsorber (A) und Desorber (D) aller Module (M1, M2) seriell mit einem in einer mit einer Abgasleitung (8) versehenen Wärmezelle (3) angeordneten und von einem Brenner (2) beaufschlagbaren Hochtemperatur-Wärmetauscher (1) mit einem Niedertemperatur-Wärmetauscher (4) sowie einer Pumpe (P1) verbindet, **dadurch gekennzeichnet dass** in der Abgasleitung (8) zwei kondensierende Abgas-Wärmetauscher (7, 9) angeordnet sind, von denen einer (7) in den Verbraucherkreislauf (W4) und der zweite (9) in den dritten Wärmeträgerkreislauf (W3) eingeschaltet ist.

## Claims

1. An adsorption heat pump having several modules wherein, apart from a load circuit (W4) comprising a load (11), a pump (P4) and at least two heat exchangers (4, 5), a total of at least three heat transfer circuits (W1, W2, W3), each comprising a pump (P1, P2, P3), are connected together, one of which (W1) connects all adsorbers (A) and desorbers (D) of all modules (M1, M2) serially with a high-temperature heat exchanger (1) exposable to the flames of a burner (2) and arranged in a heat cell (3) provided with an exhaust line (8), with a low-temperature heat exchanger (4) and with a pump (P1), **characterised in that** a condensing heat exchanger (7, 9) is arranged in the exhaust gas line (8) and that the condensing exhaust gas heat exchanger (7) is inserted in the load circuit (W4), with the flow line of the exhaust gas heat exchanger (7) being connected with the load (11) which on its downstream side is connected with a condenser heat exchanger (5) of a second heat transfer circuit (W2) which in its turn is connected with the low-temperature heat exchanger (4) connected with a return line (14) of the exhaust gas heat exchanger (7).

2. An adsorption heat pump having several modules wherein, apart from a load circuit (W4) comprising a load (11), a pump (P4) and at least two heat exchangers (4, 5), a total of at least three heat transfer circuits (W1, W2, W3), each comprising a pump (P1, P2, P3), are connected together, one of which (W1) connects all adsorbers (A) and desorbers (D) of all modules (M1, M2) serially with a high-temperature heat exchanger (1) exposable to the flames of a burner (2) and arranged in a heat cell (3) provided with an exhaust line (8), with a low-temperature heat exchanger (4) and with a pump (P1), **characterised in that** a condensing heat exchanger (7, 9) is arranged in the exhaust gas line (8) and that the exhaust gas heat exchanger (9) is inserted in a third load circuit (W3) which connects all evaporators (V) of the adsorbing modules (M2) serially with an evaporator heat exchanger (6) and a pump (P3), with the flow line (12) of the exhaust gas heat exchanger (9) being connected with the evaporators (V), and the return line (13) with the evaporator heat exchanger (6).

3. An adsorption heat pump having several modules wherein, apart from a load circuit (W4) comprising a load (11), a pump (P4) and at least two heat exchangers (4, 5), a total of at least three heat transfer circuits (W1, W2, W3), each comprising a pump (P1, P2, P3), are connected together, one of which (W1) connects all adsorbers (A) and desorbers (D) of all modules (M1, M2) serially with a high-temperature heat exchanger (1) exposable to the flames of a burner (2) and arranged in a heat cell (3) provided with an exhaust line (8), with a low-temperature heat exchanger (4) and with a pump (P1), **characterised in that** two condensing heat exchangers (7, 9) are arranged in the exhaust gas line (8), one of which (7) is inserted in the load circuit (W4) and the second one (9) in the third heat transfer circuit (W3).

## Revendications

1. Pompe à chaleur à adsorption avec plusieurs modules groupant, en plus d'un circuit utilisateur (W4) doté d'un utilisateur (11) et d'une pompe (P4) ainsi que, au moins, de deux échangeurs de chaleur (4, 5), au total au moins trois circuits calorifères (W1, W2, W3) comprenant chacun une pompe (P1, P2, P3), et dont le circuit (W1) relie en série tous les adsorbants (A) et désorbants (D) de tous les modules (M1, M2) à un échangeur de chaleur ht (1) installé dans un élément chauffant (3) muni d'un tube d'échappement (8) et alimenté par un brûleur (2), à un échangeur de chaleur bt (4) ainsi qu'à une pompe (P1), pompe **caractérisée par le fait que** le tube d'échappement (8) comprend un échangeur de chaleur (7, 9) et que l'échangeur de chaleur de gaz de combustion condensés (7) est incorporé dans le circuit utilisateur (W4), le tuyau de départ de l'échangeur de chaleur (7) étant relié à l'utilisateur (11) relié par sa sortie à un échangeur de chaleur à condenseur (5) d'un autre circuit calorifère (W2) relié à l'échangeur de chaleur bt (4) relié au tuyau de retour (14) de l'échangeur de chaleur (7).

2. Pompe à chaleur à adsorption avec plusieurs modules groupant, en plus d'un circuit utilisateur (W4) doté d'un utilisateur (11) et d'une pompe (P4) ainsi que, au moins, de deux échangeurs de chaleur (4, 5), au total au moins trois circuits calorifères (W1, W2, W3) comprenant chacun une pompe (P1, P2, P3), et dont le circuit (W1) relie en série tous les adsorbants (A) et désorbants (D) de tous les modules (M1, M2) à un échangeur de chaleur ht (1) installé dans un élément chauffant (3) muni d'un tube d'échappement (8) et alimenté par un brûleur (2), à un échangeur de chaleur bt (4) ainsi qu'à une pompe (P1), pompe **caractérisée par le fait que** le tube d'échappement (8) comprend un échangeur de chaleur de gaz de combustion condensés (7, 9) et que l'échangeur de chaleur de gaz de combustion (9) est incorporé dans un troisième circuit calorifère (W3) qui relie tous les évaporateurs (V) des modules adsorbants (M2) en série à un échangeur de chaleur à évaporateur (6) et à une pompe (P3), le tuyau de départ (12) de l'échangeur de chaleur (9) communiquant avec les évaporateurs (V), et le tuyau de retour (13) avec l'échangeur de chaleur à évaporateur (6).

3. Pompe à chaleur à adsorption avec plusieurs modules groupant, en plus d'un circuit utilisateur (W4) doté d'un utilisateur (11) et d'une pompe (P4) ainsi que, au moins, de deux échangeurs de chaleur (4, 5), au total au moins trois circuits calorifères (W1, W2, W3) comprenant chacun une pompe (P1, P2, P3), et dont le circuit (W1) relie en série tous les adsorbants (A) et désorbants (D) de tous les modules (M1, M2) à un échangeur de chaleur ht (1) installé dans un élément chauffant (3) muni d'un tube d'échappement (8) et alimenté par un brûleur (2), à un échangeur de chaleur bt (4) ainsi qu'à une pompe (P1), pompe **caractérisée par le fait que** le tube d'échappement (8) comprend deux échangeurs de chaleur de gaz de combustion condensés (7, 9) dont l'un (7) est incorporé dans le circuit utilisateur (W4) et l'autre (9), dans le troisième circuit calorifère (W3).
